# EUROPÄISCHE PATENTANMELDUNG

(11) **EP 1 989 977 A1**
(43) Veröffentlichungstag der Anmeldung: **12.11.2008**
(21) Anmeldenummer: 07108082.4
(22) Anmeldetag: 11.05.2007
(51) Int. Cl.: A47J 31/06

(54) **Filterhalter für Brühgetränke**

(71) Anmelder: Pirkl, Herbert Robert, 82380 Peissenberg (DE); Merz, Michaela, 82386 Hohenpeissenberg (DE)
(72) Erfinder: Pirkl, Herbert, 82380 Peißenberg (DE)
(74) Vertreter: Reitstötter - Kinzebach

(57) **Zusammenfassung**

Die Erfindung betrifft einen Filterhalter für Brühgetränke, insbesondere einen Kaffeefilterhalter, mit einem Innenraum (33) zur Aufnahme eines Filters, wobei der Innenraum (33) durch eine Seitenwand (34) und einen Boden (35) mit wenigstens einer Ablauföffnung (36a;36b) begrenzt ist und eine obere Eintrittsöffnung (37) aufweist, die durch einen Aufsatz (18) zum Verteilen von Brühwasser verschließbar ist, wobei der Aufsatz (18) Durchlassöffnungen (25) aufweist, die als schlitzartige Kreissegmente ausgebildet sind, welche konzentrisch um das Zentrum des Aufsatzes (18) herum angeordnet sind, dadurch gekennzeichnet, dass Abstandshalter (27;127;227) vorgesehen sind, die so angeordnet sind, dass zwischen der Seitenwand (34) bzw. dem Boden (35) und einem in dem Innenraum angeordneten Filter ein Strömungsweg für die aufgebrühte Flüssigkeit zu der Ablauföffnung (36a,37a) hin frei bleibt.

## Beschreibung

Die Erfindung betrifft einen Filterhalter für Brühgetränke, insbesondere einen Kaffeefilterhalter und eine mit einem solchen Filterhalter versehene Kaffeemaschine.

In Privathaushalten, aber auch im gastronomischem Bereich, werden zur Herstellung von Filterkaffee üblicherweise Kaffeemaschinen verwendet, bei denen erhitztes Wasser, das im Folgenden als Brühwasser bezeichnet wird, nach Durchlaufen einer Heizeinrichtung über einen Tropfauslass auf Kaffeemehl aufgegeben, das sich in einem trichterförmigen Filter befindet, der wiederum in einem Filterhalter angeordnet ist. Am Boden des Filterhalters sind ein oder mehrere Öffnungen ausgespart, durch die der Kaffee mit dem aus dem Kaffeemehl extrahierten Aromastoffen in eine unter dem Filterhalter angeordnete Kaffeekanne fließen kann. Anstelle einer üblichen Kaffeemaschine mit integrierter Heizvorrichtung für das Brühwasser, kann eine solche Filteranordnung selbstverständlich auch manuell mit separat erhitztem Wasser, beispielsweise aus einem Wasserkocher, beaufschlagt werden.

Sowohl bei einem manuellen Kaffeebrühverfahren, als auch bei einem automatischen Brühverfahren, wird das Brühwasser üblicherweise im Zentrum des Kaffeefilters aufgegeben, so dass die Extraktion von Aromastoffen in erster Linie in diesem Bereich erfolgt. In den Randbereichen ist die Ausnutzung des Kaffeemehls wesentlich schlechter, so dass hier Aromastoffe zum überwiegenden Teil im Kaffeemehl verbleiben. Um auf diese Weise einen aromatisch schmeckenden Kaffee zu brühen, ist es daher erforderlich, eine entsprechend große Menge des Kaffeemehls zu verwenden, da im mittleren Bereich des Kaffeefilters die Aromastoffe relativ schnell ausgezehrt sind, während im Randbereich des Filters das Kaffeemehl nur unzureichend genutzt wird.

Um eine besseren Verteilung des Brühwassers auf dem Kaffeemehl zu erreichen, wurde in der europäischen Patentanmeldung EP-A-1 502 526 ein Kaffeefilteraufsatz mit einer Verteilerscheibe vorgeschlagen, in der Durchlassöffnungen ausgespart sind, die als schlitzartige Kreissegmente ausgebildet sind, die konzentrisch um das Zentrum der Verteilerscheibe herum angeordnet sind. Mit diesem Brühwasserverteileraufsatz wird gewährleistet, dass das, beispielsweise in einem Papierfilter im Filterhalter befindliche Kaffeemehl über den gesamten, senkrecht zur Wasseraufgabe betrachteten Querschnitt gleichmäßig mit Brühwasser benetzt wird. Die Effizienz der Extraktion von Aromastoffen im Kaffeemehl wird somit optimiert. Durch die Ausbildung der Durchlassöffnungen als schlitzartige Kreissegmente ist zudem gewährleistet, dass ausreichend viel Brühwasser auf das Kaffeemehl aufgegeben wird, so dass das Kaffeemehl wirksam aufgewirbelt und gleichmäßig und vollständig von Brühwasser umspült wird, was die Abgabe von Aromastoffen begünstigt.

Während die zwar Ausnutzung von Kaffeemehl durch diesen Aufsatz optimiert wird, ist es die Aufgabe der vorliegenden Erfindung, das geschmackliche Ergebnis beim Aufbrühen des Kaffees oder anderer Brühgetränke weiter zu verbessern.

Gelöst wird dieses technische Problem durch den Filterhalter für Brühgetränke mit den Merkmalen des vorliegenden Anspruch 1. Vorteilhafte Weiterbildungen der Erfindung sind Gegenstand der abhängigen Ansprüche. Der erfindungsgemäße Filterhalter ist in erster Linie zum Aufbrühen von Kaffee vorgesehen. Er eignet sich aber ebenso zum Aufbrühen anderer Getränke wie beispielsweise von Tee oder von Kräuterextrakten. Der Einfachheit halber wird die Erfindung im folgenden aber unter Bezugnahme auf einen Kaffeefilterhalter erläutert.

Die Erfindung betrifft demnach einen Filterhalter für Brühgetränke, insbesondere einen Kaffeefilterhalter, mit einem Innenraum zur Aufnahme eines Filters, wobei der Innenraum durch eine Seitenwand und einen Boden mit wenigstens einer Ablauföffnung begrenzt ist und eine obere Eintrittsöffnung aufweist, die durch einen Aufsatz zum Verteilen von Brühwasser verschließbar ist, wobei der Aufsatz Durchlassöffnungen aufweist, die als schlitzartige Kreissegmente ausgebildet sind, welche konzentrisch um das Zentrum des Aufsatzes herum angeordnet sind. Der erfindungsgemäße Filterhalter ist dadurch gekennzeichnet, dass Abstandshalter vorgesehen sind, die so angeordnet sind, dass zwischen der Seitenwand bzw. dem Boden und einem in dem Innenraum angeordneten Filter ein Strömungsweg für die aufgebrühte Flüssigkeit zu der Ablauföffnung hin frei bleibt.

Der Erfindung liegt dabei die Erkenntnis zugrunde, dass beispielsweise der als angenehm und von Bitterstoffen weitgehend freie Geschmack eines Espresso auf die kurze Verweildauer des unter hohem Druck durch das Kaffeemehl gepressten Brühwassers zurückzuführen ist. Die Erfindung will dieses geschmackliche Resultat auf herkömmlich, ohne Überdruck arbeitende Aufgusskaffeemaschinen übertragen. Dazu stellt der erfindungsgemäße Filterhalter durch zwischen dem Filterpapier und der Wand bzw. dem Boden des Filterhalters vorgesehene Abstandshalter Strömungswege bereit, über die aufgebrühter Kaffee zu einer Ablauföffnung fließen kann, ohne weiteres Kaffeemehl durchqueren zu müssen. Dadurch ist die Verweildauer des Brühwassers im Kaffeemehl kurz genug, um zu verhindern, dass übermäßig viele Bitterstoffe an den Kaffee abgegeben werden. In Kombination mit dem eingangs beschriebenen Kaffeefilteraufsatz erhält man daher einen geschmacklich gehaltvollen aber keineswegs bitter schmeckenden Kaffee und erzielt gleichzeitig eine hohe Ergiebigkeit bei der Ausnutzung des Kaffeemehls. Im Hinblick auf bevorzugten Ausgestaltungen des Kaffeefilteraufsatzes wird auf die europäische Patentanmeldung EP-A-1 502 526 verwiesen, auf deren gesamten Inhalt hiermit vollumfänglich Bezug genommen wird.

Vorzugsweise umfassen die Abstandshalter mehrere an der Innenfläche der Seitenwand angeordnete, im wesentlich zur Ablauföffnung hin orientierte Rippen oder Rillen. Ein Teil des schon aufgebrühten Kaffees kann so entlang der seitlichen Innenflächen des Filterhalters zur Ablauföffnung fließen, da verhindert wird, dass sich der Kaffeefilter vollständig an den Rand anlegt. Vorteilhaft verringert sich die Höhe der Rippen bzw. die Tiefe der Rillen von etwa 3 mm in der Nähe der oberen Öffnung auf etwa 1 mm in der Nähe der unteren Ablauföffnung. Es sind, je nach Größe des Filters, 8 bis 36, vorzugsweise 12 bis 24 Rippen oder Rillen vorgesehen sind. Der Innenraum weist vorzugsweise eine sich in Richtung Ablauföffnung kegelstumpfartig verjüngenden Form auf.

Vorteilhaft weist der Kaffeefilter auch vom Boden des Filters einen Abstand auf, der ein ungestörtes Ablaufen des aufgebrühten Kaffees ermöglicht. Mit dieser Maßnahme wird ein rasches Abfließen des aufgebrühten Kaffees begünstigt. Damit wird auch verhindert, dass sich bereits aufgebrühter Kaffee längere Zeit im Kaffeemehl staut und dabei Bitterstoffe aus dem Kaffeemehl extrahiert. Durch die gleichzeitige Verwendung des Aufsatzes der EP-A-1 502 526 wird aufgrund der optimierten Ausnutzung des Kaffeemehls trotz kurzer Verweilzeit des Brühwassers im Kaffeemehl ein voller und kräftiger Geschmack des aufgebrühten Kaffees gewährleistet.

Gemäß einer ersten Ausführungsform, die sich insbesondere für Spitzfilter eignet, umfassen die am Boden vorgesehenen Abstandshalter wenigstens eine am Boden des Innenraums angeordnete Rippe oder Rille. Dabei sind besonders bevorzugt zwei kreuzförmig angeordnete horizontale Rippen am Boden des Innenraums angeordnet. Damit der aufgebrühte Kaffee trotz des Rippenkreuzes ungehindert zu den Ablauföffnungen abfließen kann, sind die horizontalen Rippen vorzugsweise vom äußeren Rand des Bodens ca. 0,5 bis 2 mm, vorteilhaft ca. 1 mm beabstandet. Gemäß einer bevorzugten Variante sind zwei Ablauföffnungen in zwei sich gegenüberliegenden von den kreuzförmig angeordneten horizontalen Rippen definierten Quadranten des Bodens des Filterhalters angeordnet.

Gemäß einer zweiten Ausführungsform, die sich insbesondere für Korbfilter eignet, wie sie beispielsweise in Großkaffeemaschinen verwendet werden, sind die Abstandshalter zum Boden hin als über dem Boden des Innenraums angeordnetes sieb- , gitter- oder netzartiges Bauteil ausgebildet, das gewährleistetet wird, dass der Korbfilter in einem bestimmten Abstand über der Ablauföffnung angeordnet ist, während aufgebrühter Kaffee durch Öffnungen des Bauteils in Richtung Ablauföffnung des Filterhalters passieren kann. Besonders vorteilhaft ist ein solches Bauteil ein Lochblech, auf welchem der Korbfilter aufliegen kann. Damit das Lochblech nicht beim Entleeren des Filterhalters mit ausgeschüttet wird, ist es vorteilhaft durch einen bajonettartigen Verschluss lösbar in seiner eingebauten Position fixiert. Dazu kann beispielsweise an der Innenfläche der Seitenwand des Filterhalters eine vorspringende Haltenase angeordnet sein, unter die das Lochblech gedreht wird. Das Lochblech selbst weist wiederum eine Ausnehmung am Umfang auf, die so bemessen ist, dass das Lochblech in einer bestimmten Stellung, in der die Winkelposition von Haltenase und Ausnehmung übereinstimmen, aus dem Filterhalter herausgenommen werden kann.

Gegenstand der Erfindung ist auch eine Kaffeemaschine mit einem wie oben definierten Filterhalter. Die Kaffeemaschine weist ein Gehäuse, einen Frischwasserbehälter, eine Brüheinrichtung, eine Filtereinheit mit dem erfindungsgemäßen Filterhalter und einen unter der Filtereinheit angeordneten Kaffeebehälter auf. Es versteht sich, dass weitere von Kaffeemaschinen her bekannte Bauelemente vorgesehen sein können, auf die hier nicht weiter eingegangen werden braucht. Erwähnt sei lediglich, dass die Ablauföffnung des erfindungsgemäßen Filterhalters beispielsweise mit einem an sich bekannten Tropfschutz (auch als "Trip Stop" bezeichnet) versehen sein kann.

Die Erfindung wird im folgenden unter Bezugnahme auf ein in der beigefügten Zeichnung dargestelltes Ausführungsbeispiel näher erläutert.

In der Zeichnung zeigt
- Fig. 1: eine schematische Darstellung einer erfindungsgemäßen Kaffeemaschine;
- Fig. 2: eine Aufsicht auf den Kaffeefilteraufsatz der Kaffeemaschine der Fig. 1;
- Fig. 3: einen Querschnitt durch den Kaffeefilteraufsatz der Figur 2;
- Fig. 4: einen Querschnitt einer ersten Ausführungsform des erfindungsgemäßen Filterhalters;
- Fig. 5: eine Aufsicht auf den Filterhalter der Fig. 4;
- Fig. 6: eine Variante des Filterhalters der Figur 4;
- Fig. 7: einen Querschnitt einer zweiten Ausführungsform des erfindungsgemäßen Filterhalters; und
- Fig. 8: eine Aufsicht auf den Filterhalter der Figur 7.

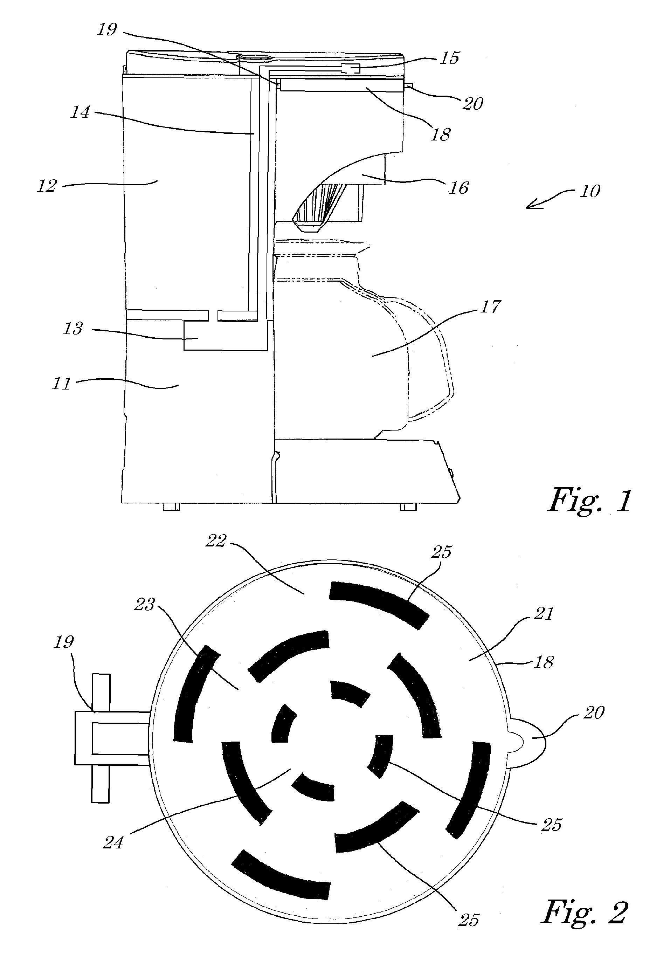

Fig. 1 zeigt schematisch eine insgesamt mit der Bezugsziffer 10 bezeichnete erfindungsgemäße Kaffeemaschine, die mit einem erfindungsgemäßen Kaffeefilterhalter ausgestattet ist. Die Kaffeemaschine 10 umfasst in an sich bekannter Weise ein Gehäuse 11, einen Frischwasserbehälter 12, eine Brüheinrichtung, die eine Heizeinheit 13, ein Steigrohr 44 und einen Auslass 15 für das Brühwasser umfasst, einer Filtereinheit mit einem erfindungsgemäßen Filterhalter 16 und einen unter der Filtereinheit angeordneten Kaffeebehälter 17. Die Filtereinheit umfasst außerdem einen über dem Filterhalter, also zwischen der Auslassöffnung 15 für Brühwasser und dem Filterhalter 16 angeordneten erfindungsgemäßen Kaffeefilteraufsatz 18. Der Kaffeefilteraufsatz ist im dargestellten Beispiel über ein Scharnier 19 am Gehäuse 11 der Kaffeemaschine schwenkbar angelenkt und kann vom Benutzer bei Bedarf mittels der Haltenase 20 beispielsweise nach oben weggeklappt oder seitlich weggeschwenkt werden.

Fig. 2 zeigt eine Aufsicht auf die Oberseite 21 des Kaffeefilteraufsatzes 18 der Figur 1. Der Kaffeefilteraufsatz 18 und bevorzugten Varianten dieses Aufsatzes, die auch im Zusammenhang mit der vorliegenden Erfindung eingesetzt werden können, sind beispielsweise in der EP-A-1 502 526 der Anmelder beschrieben, so dass der Filteraufsatz hier nur kurz beschrieben wird. Man erkennt bei der dargestellten Ausführungsform des Kaffeefilteraufsatzes drei Kreisringe 22, 23, 24 , auf denen jeweils 4 Durchlassöffnungen 25 gleichmäßig verteilt sind. Bei der in Figur 2 dargestellten Variante am Außenrand des Kaffeefilteraufsatzes 10 ein Bügel 19 eines Scharniers als Befestigungsmittel angeformt ist, so dass der Kaffeefilteraufsatz schwenkbar am Gehäuse einer Kaffeemaschine angelenkt werden kann. Zur leichteren Handhabung des Kaffeefilteraufsatzes ist außerdem eine Haltenase 20 vorgesehen, die vom Benutzer zum Schwenken des Kaffeefilteraufsatzes ergriffen werden kann.

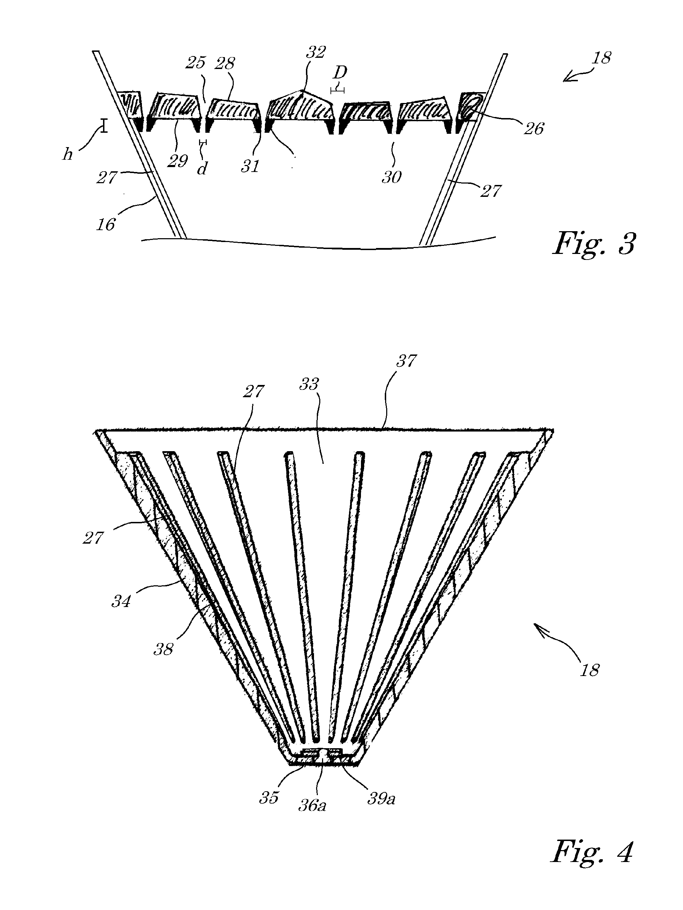

In Figur 3 ist ein Querschnitt des Kaffeefilteraufsatzes 18 der Figur 2 dargestellt. Der Kaffeefilteraufsatz 18 besteht im wesentlichen aus einer Verteilerscheibe 26 und liegt auf den oberen Enden von Rippen 27 auf, die auf der Innenfläche des (nur teilweise angedeuteten) Filterhalters 16 vorgesehen sind. Die Verteilerscheibe 26 weist eine Oberseite 28 und eine im Wesentlichen ebene Unterseite 29 auf. In der Verteilerscheibe 26 sind schlitzartige Durchlassöffnungen 25 ausgespart, die mit einem ersten Durchmesser D in die Oberseite 28 und mit einem kleineren Durchmesser d in die Unterseite 29 münden. Im Querschnitt der Fig. 1 weisen die Durchlassöffnungen 25 daher eine trichterförmige Verjüngung auf. Um ein gleichmäßiges und definiertes Abtropfen des Brühwassers auf das Kaffeemehl zu erreichen, erstrecken sich die Durchlassöffnungen 25 in Form von Auslasskanälen 30 über die im Wesentlichen ebene Unterseite 29 der Verteilerscheibe 26 hinaus nach unten. Die Auslasskanäle weisen einen kegelstumpfartigen Querschnitt auf und enden in einer Abrisskante 31, an der das Brühwasser definiert abtropfen kann. Im dargestellten Beispiel ist die lichte Weite, d.h. der Durchlass in den Auslasskanälen über die gesamte Höhe h des Auslasskanals hinweg konstant und entspricht dem zweiten Durchmesser d der entsprechenden Durchlassöffnung. Vorzugsweise liegt der zweite Durchmesser d im Bereich von 1 mm. Die Durchlassöffnungen 25 sind auf den in Fig. 2 dargestellten konzentrischen Kreisen 22,23,24 angeordnet, wobei im dargestellten Beispiel ein Kaffeefilteraufsatz mit einem Durchmesser von 13 cm verwendet wird, der beispielsweise für die weit verbreiteten 104-Filterhalter geeignet ist. Aufgrund der Aufteilung der Durchlassöffnungen auf drei konzentrischen Kreise wird eine gleichmäßige Aufgabe des Brühwassers über den gesamten Filterquerschnitt erreicht.

Die Oberseite 28 des Kaffeefilteraufsatzes ist so profiliert, dass das oben eingegossene heiße Wasser möglichst gleichmäßig auf die einzelnen Kreise 22, 23, 24 verteilt wird. So ist im dargestellten Beispiel eine zentrale Erhebung 32 vorgesehen, die das beispielsweise von einer automatischen Kaffeemaschine erzeugte heiße Wasser, das von einem Tropfauslass der Heizeinrichtung herabtropft, gleichmäßig in radialer Richtung verteilt. Die Oberseite 28 kann zum Außenumfang hin entlang einer Schräge ansteigen.

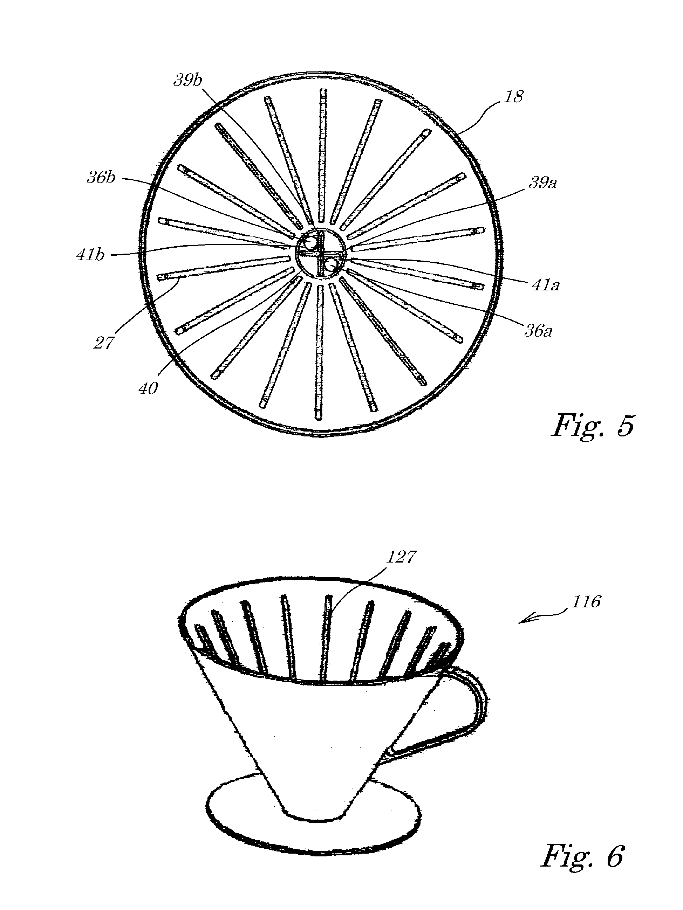

In Figur 4 ist eine erste Ausführungsform des Filterhalter 16 detaillierter dargestellt, wie er beispielsweise in der Kaffeemaschine 10 der Figur 1 verwendet werden kann. Der Filterhalter 16 weist einen sich von oben nach unten verjüngenden Innenraum 33 zur Aufnahme eines (nicht dargestellten) Kaffeefilters auf. Der Innenraum 33 ist durch eine schräg nach unten verlaufende Seitenwand 34 und einen im wesentlichen horizontalen oder leicht nach unten geneigten Boden 35 begrenzt. In dem Boden 35 sind zwei in Figur 5 deutlicher erkennbare Ablauföffnungen 36a, 36b ausgespart. Der Filterhalter 16 weist eine obere Eintrittsöffnung 37 auf, in welche der in den Figuren 2 und 3 dargestellten Brühwasserverteileraufsatz 18 eingesetzt werden kann. Der Aufsatz kann dabei frei oder mit leichtem Presssitz aufliegen. Der Aufsatz kann gemäß einer Variante aber auch durch einen Verschluss, beispielsweise einen Bajonettverschluss fixiert werden. Bei der dargestellten Variante würde der - in Figur 4 aber der Übersichtlichkeit halber nicht gezeigte - Aufsatz 18 auf den oberen Enden der Abstandshalter 27 aufliegen, die so angeordnet sind, dass zwischen der Seitenwand 34 bzw. dem Boden 35 und einem in dem Innenraum angeordneten Kaffeefilters ein Strömungsweg für die aufgebrühte Flüssigkeit zu den Ablauföffnungen 36a, 36b hin frei bleibt. Im dargestellten Beispiel sind die Abstandshalter in Form von mehren an der Innenfläche 38 der Seitenwand 34 angeordnete, im wesentlich zur Ablauföffnung 36a, 36b hin orientierte Rippen ausgebildet. Die Höhe der Rippen 27 beträgt der Nähe der oberen Öffnung 37 etwa 3 mm und in der Nähe der unteren Öffnung 36a, 36b etwa 1 mm. Am Boden 35 des Filterhalters sind die Abstandshalter, wie in Figur 5 besser erkennbar ist, in Form von zwei kreuzförmig angeordneten Rippen 39a, 39b ausgebildet. Die Rippen 39a, 39b weisen dabei einen Abstand vom äußeren Rand 40 des Bodens 35 auf, so dass das der aufgebrühte Kaffee die Ablauföffnungen 36a, 36b problemlos erreichen kann.

In Figur 5 ist eine Aufsicht auf den Filterhalter 16 der Figur 4 dargestellt. Man erkennt, dass die kreuzförmigen Rippen 39a, 39b den Boden in vier Quadranten unterteilen. In zwei sich diametral gegenüberliegenden Quadranten 41 a, 41 b sind die beiden Ablauföffnungen 36a, 36b angeordnet.

In Figur 6 ist eine Variante 116 des Filterhalters 16 der Figuren 4 und 5 dargestellt, der im Gegensatz zum Filterhalter der Figuren 4 und 5 nicht in eine Kaffeemaschine integriert, sondern als separater Aufsatz für Tassen oder Kannen gedacht ist, der beispielsweise mit in einem Wasserkocher erhitztem Brühwasser aufgegossen werden kann. Auch in den Kaffeefilter 116 kann ein Brühwasserverteileraufsatz, wie der Aufsatz 18 der Figuren 2 und 3, eingesetzt werden.

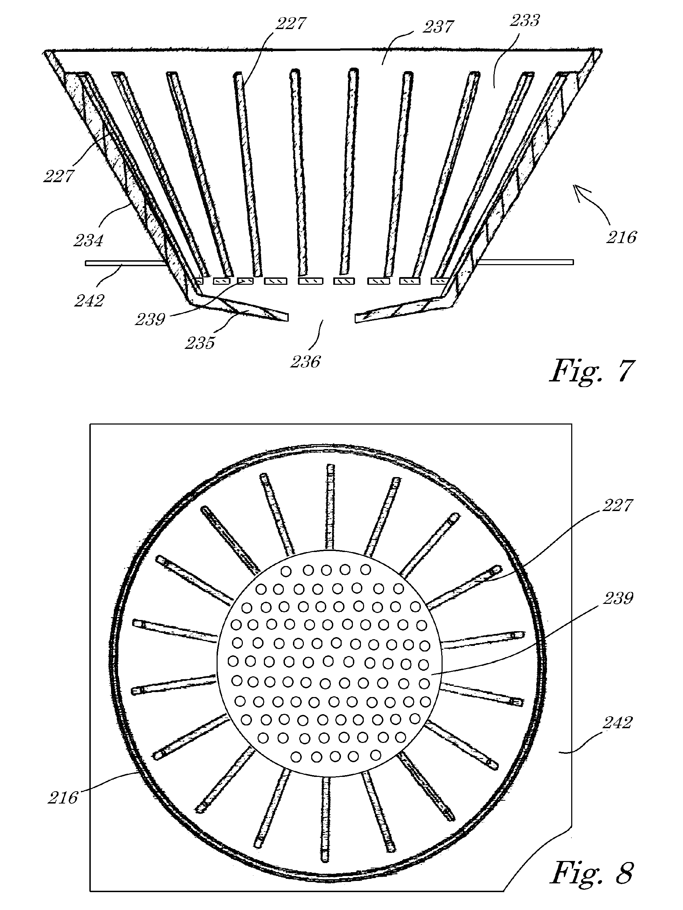

In den Figuren 7 und 8 ist eine zweite Ausführungsform des erfindungsgemäßen Kaffeefilterhalters dargestellt, der insgesamt mit der Bezugsziffer 216 bezeichnet ist. Der Kaffeefilter 216 eignet sich insbesondere zur Aufnahme von Korbfiltern, wie sie für Großkaffeemaschinen vorgesehen sind. Während die seitlichen Abstandshalter, wie bei dem Filterhalter der Figuren 4 und 5, als im wesentlichen entlang der nach unten geneigten Innenfläche der Seitenwand 234 des Filterhalters 216 verlaufende Rippen 227 ausgebildet sind, ist der Abstandshalter zum Boden 235 hin bei dieser Variante als ein über dem Boden 235 angeordnetes Lochblech 239 aufgebildet. Der Boden 235 ist leicht nach untengeneigt und führt zu einer einzigen zentralen Ablauföffnung 236, die bei dieser Ausführungsform für den Austritt des aufgebrühten Kaffees in dem Boden 235 vorgesehen ist. Der Abstand zwischen Boden und Lochblech beträgt vorzugsweise einige Millimeter. Am Rand des Bodens 235 kann das Lochblech auf dem Boden aufliegen oder, wie in Figur 7 dargestellt, einen Abstand von ca. 1 mm vom Boden haben. Das Lochblech 239 kann in der dargestellten Position durch Verdrehen fixiert werden, so dass verhindert wird, dass es beim Ausleeren des Kaffeefilters mit ausgeleert wird. Für den Einsatz in Großkaffeemaschinen erweist es sich außerdem als sinnvoll, eine seitliche Platte 242 an dem Filterhalter vorzusehen, mit der er in eine entsprechende Aufnahme in der Großkaffeemaschine eingeschoben werden kann.

## Patentansprüche

1. Filterhalter für Brühgetränke, insbesondere Kaffeefilterhalter, mit einem Innenraum (33;233) zur Aufnahme eines Filters, wobei der Innenraum (33;233) durch eine Seitenwand (34;234) und einen Boden (35;235) mit wenigstens einer Ablauföffnung (36a;36b;236) begrenzt ist und eine obere Eintrittsöffnung (37;237) aufweist, die durch einen Aufsatz (18) zum Verteilen von Brühwasser verschließbar ist, wobei der Aufsatz (18) Durchlassöffnungen (25) aufweist, die als schlitzartige Kreissegmente ausgebildet sind, welche konzentrisch um das Zentrum des Aufsatzes (18) herum angeordnet sind, **dadurch gekennzeichnet, dass** Abstandshalter (27; 127;227) vorgesehen sind, die so angeordnet sind, dass zwischen der Seitenwand (34;234) bzw. dem Boden (35;235) und einem in dem Innenraum angeordneten Filter ein Strömungsweg für die aufgebrühte Flüssigkeit zu der Ablauföffnung (36a,37a;236) hin frei bleibt.

2. Filterhalter gemäß Anspruch 1, **dadurch gekennzeichnet, dass** die Abstandshalter mehrere an der Innenfläche (38) der Seitenwand (34) angeordnete, im wesentlich zur Ablauföffnung hin orientierte Rippen (27;127;227) oder Rillen umfasst.

3. Filterhalter gemäß Anspruch 2, **dadurch gekennzeichnet, dass** die Höhe der Rippen (27; 127;227) bzw. die Tiefe der Rillen von etwa 3mm in der Nähe der oberen Öffnung (37;237) auf etwa 1 mm in der Nähe der unteren Öffnung (36a,36b;236) verringert.

4. Filterhalter gemäß einem der Ansprüche 2 oder 3, **dadurch gekennzeichnet, dass** 8 bis 36, vorzugsweise 12 bis 24 Rippen (27;127;227) oder Rillen vorgesehen sind.

5. Filterhalter gemäß einem der Ansprüche 1 bis 4, **dadurch gekennzeichnet, dass** die Abstandshalter wenigstens eine am Boden (35) des Innenraums (33) angeordnete Rippe (39a,39b) oder Rille umfassen.

6. Filterhalter gemäß Anspruch 6, **dadurch gekennzeichnet, dass** zwei kreuzförmig angeordnete horizontale Rippen (39a,39b) am Boden (35) des Innenraums (35) angeordnet sind.

7. Filterhalter gemäß einem der Ansprüche 6 oder 7, **dadurch gekennzeichnet, dass** die horizontalen Rippen (39a,39b) vom äußeren Rand (40) des Bodens (35) beabstandet sind

8. Filterhalter gemäß einem der Ansprüche 6 oder 7, **dadurch gekennzeichnet, dass** zwei Ablauföffnungen (36a,36b) in zwei sich gegenüberliegenden von den kreuzförmig angeordneten horizontalen Rippen definierten Quadranten (41 a,41 b) des Bodens (35) angeordnet sind.

9. Filterhalter gemäß einem der Ansprüche 1 bis 4, **dadurch gekennzeichnet, dass** die Abstandshalter ein über dem Boden (235) des Innenraums (233) angeordnetes sieb-, gitter- oder netzartiges Bauteil (239) umfassen.

10. Filterhalter gemäß Anspruch 9, **dadurch gekennzeichnet, dass** das Bauteil als Lochblech (239) ausgebildet ist.

11. Filterhalter gemäß Anspruch 10, **dadurch gekennzeichnet, dass** das Lochblech (239) durch einen bajonettartigen Verschluss lösbar in seiner Position fixiert ist.

12. Filterhalter gemäß einem der Ansprüche 1 bis 11, **dadurch gekennzeichnet, dass** sich der Innenraum (33;233) von der oberen Öffnung (37;137;237) zur unteren Ablauföffnung (36a,36b;236) hin kegelstumpfartig verjüngt.

13. Filterhalter gemäß einem der Ansprüche 1 bis 12, **dadurch gekennzeichnet, dass** der Aufsatz (18) lösbar in die obere Öffnung (37;237) eingesetzt ist.

14. Kaffeemaschine mit einem Filterhalter nach einem der Ansprüche 1 bis 13.
